# EUROPEAN PATENT SPECIFICATION

(11) **EP 0 643 923 B1**
(45) Date of publication and mention of the grant of the patent: **12.11.1997**
(21) Application number: 93114108.9
(22) Date of filing: 02.09.1993
(51) Int. Cl.: A23L 1/31, A23L 1/325, A23P 1/08

(54) **Treatment of meat or fish**
Behandlung von Fleisch oder Fisch
Traitement de viande ou poisson

(43) Date of publication of application: 22.03.1995
(73) Proprietor: SOCIETE DES PRODUITS NESTLE S.A., 1800 Vevey (CH)
(72) Inventor: Reutimann, Ernest, New Milford,CT 06776 (US); Vadehra, Dahram Vir, New Milford CN 06776 (US); Wedral, Elaine Regina, Sherman,CN 06784 (US)

(56) References cited:
- EP-A- 0 224 958
- US-A- 4 897 275
- DATABASE WPI Week 8331, Derwent Publications Ltd., London, GB; AN 83-727099 & SU-A-959 744 (MOSC. NATION. ECONOMY) 28 September 1982
- DATABASE WPI Week 8420, Derwent Publications Ltd., London, GB; AN 84-123301 & JP-A-59 059 179 (QP TAMAGO KK) 4 April 1984
- PATENT ABSTRACTS OF JAPAN vol. 007, no. 242 (C-192)27 October 1983 & JP-A-58 129 942 (NITSUTOU SEIFUN KK) 3 August 1983
- DATABASE WPI Week 8749, Derwent Publications Ltd., London, GB; AN 87-344981 & JP-A-62 248 466 (AGEL SHOKUHIN KK) 29 October 1987

## Description

The present invention relates to the treatment of meat or fish, more particularly to a process of coating meat or fish with an agent which enhances moisture retention within the food during preparation of the food for immediate or subsequent consumption and during storage.

The process of this invention is suitable for chilled or frozen meat or fish products which are later consumed for consumption, for example, stir-fry dishes and steaks.

Of particular recent interest in convenience food preparation is a method known as sous vide, which is employed for providing microbiologically stable vacuum packed foods, including meats, and particularly fish, which require only heating to a desirable temperature for consumption. In this process, a raw meat is placed in a pouch, preferably transparent, which then is vacuum sealed. The pouch containing the meat is heated, generally by placing it in a water bath which has a temperature of from about 60°C to about 75°C until the meat reaches an internal core temperature ("ICT") which is considered sufficient to at least make the meat microbiologically stable for storage, i.e. , generally 60°C and above. Then, the meat is held at the stated temperature for about 15 mins to about 20 mins. The pouch and contents then are chilled to a refrigeration temperature, i.e., generally about 4°C to about 8°C, and/or frozen.

However, when preparing products such as meat in the sous vide manner, although the objective of the process is to provide a convenience product having the appearance and characteristics of a fresh product when purchased and prepared for consumption, that objective has not been able to be realized effectively. Problems are particularly acute for fish because it loses fluids readily and becomes not only dry, fibrous and tough upon consumption, but also the product is not aesthetically pleasing in the package because of fluids which exude from the products.

One means employed to attempt to obtain a final sous-vide product containing sufficient fluids and moistness has been to marinate the raw meat prior to vacuum packing it. However, on one hand, the marination tends to impart a texture to the meat which is not characteristic of conventionally cooked fresh meat, and on another hand, because the marination fluids tend to separate from the solids, the solids tend to form into a granular type consistency during the ICT cooking and during preparation for consumption.

Additionally, in the sous vide process, and for that matter in preparation of other meat or meat-containing convenience foods, it often is preferred to sear or grill the meat first to impart color to the meat to effect a desirable aesthetic effect. That, however, generally also results in a fluid loss which may range, depending upon the meat, up to about 10% by weight which, as is evident from the above discussion, contributes to a final product having a dry, fibrous, and tough texture.

Moreover, in the sous vide process or with boil-in-bag type products, as are known also in the art, and which contain meat, for example, moisture generally separates from the meat during any preparative heating process and during storage in a further amount of from about 5% to about 15% by weight. As noted above, that presents an unappealing appearance in the package, even if an absorbent material, which is sought to be avoided, is included in the package to soak up the fluids.

US-A-4897275 discloses a method of treating fish which comprises coating the fish with a dry mixture comprising porous particles such as starch and a hygroscopic powder such as albumen or milk protein powder which mixture is fried in hot oil before coating the fish. DATABASE WPI, AN 83-727099 describes coating foodstuffs with a mixture containing proteins which have been denatured.

We have developed a novel moisture retention system which acts as a sealant and when using such a system, cooked products, particularly in the area of convenience foods, are obtained which have a significantly higher cooked weight and organoleptic and aesthetic appeal than if the products were not treated with the coating mixtures of the invention. It is also possible to avoid the necessity of treating an interior mass of foods, and thus enable one to avoid marination, tumbling and injection procedures of the art to obtain moisture retention.

Accordingly, the present invention provides a method of treating meat or fish which comprises coating the meat or fish with a substantially dry particulate mixture comprising from 5 to 50% by weight of an uncoagulated heat set protein and from 95 to 50% by weight of an unmodified ungelatinised starch each weight being based upon the weight of the mixture wherein the amount of water in the mixture is less than 10%.

The mixture is preferably free flowing and may be in the form of a powder, beads, granules or agglomerates. A typical mixture may have a particle size whereby substantially 100% passes through a US standard Sieve Mesh No 40 (0.420mm) and about 85-95% passes through a US standard Sieve Mesh No 60 (0.250mm).

The mixture may be obtained by simple admixture of the ingredients preferably at a temperature below 50°C to avoid coagulating the protein or gelatinising the starch.

The ratio of the heat set protein to the starch may be from 1:10 to 1:2 and preferably from 2:10 to 6:10.

The meat or fish may be, for instance, red meat, poultry or fish.

In the present invention, "whole" foods are treated as opposed to ground or comminuted foods. "Whole" foods are intended to include discrete pieces of foods, large and small, which have not been subjected to a comminution or grinding procedure which thereby requires a mixing procedure, rather than a coating procedure, to incorporate additives and which thereafter requires molding or otherwise forming the food to obtain discrete reformed pieces. Whole foods, however, also are intended to include ground of comminuted foods which have been molded or otherwise reformed into a mass, and in this context, in accordance with a process of the invention, the outer, or exterior, of the formed mass is coated.

The heat set protein is preferably in powdered or agglomerated form and may be a food grade protein or a combination thereof, such as a milk protein or an egg protein such as egg white or egg albumen. Egg white powder or agglomerate may be used as a source of the egg protein. Some particularly useful milk proteins include those obtained from skim milk, whey and milk protein concentrates and isolates and other products including but not limited to low lactose whey powder. A whey protein concentrate known as LACPRODANE 80 (RTM) protein concentrate has been found to provide particularly desirable results.

In the practice of the present invention, the heat set protein must be present in the mixture in an amount sufficient so that a substantially continuous film of the heat set protein can be and is coated on the meat or fish and so that upon heating of the coated meat or fish, thereby resulting in coagulation of the protein, the coagulated protein inhibits escape of water from the food. To effect this result, the amount of heat set protein employed should comprise at least 10%, and preferably at least 15%, by weight based upon the weight of the mixture to be applied to the meat or fish as the coating, and when coated on the meat or fish, the heat set protein will comprise at least 0.25%, and preferably at least 0.3%, by weight based upon the weight of the meat or fish to be coated.

Generally, for the best results, the heat set protein may be employed in the mixture in an amount of from 15% to 35% by weight based upon the weight of the mixture, and preferably from 20% to 30% by weight.

It is essential that an unmodified, i.e., not gelatinized, starch be employed to enable applying, particularly in the cases of raw meat or fish an effective coating to the meat or fish. Although it is sought that the heat set protein provides the primary fluid retention function of the coating, as will be appreciated upon practice of the present inventions, after the unmodified starch has been coated on the meat or fish and heated, it then has the ability to operate to take up moisture which may escape from the meat or fish. It also has been discovered, however, that the starch contributes elasticity to the heat set protein which acts to relieve stress upon it, which thereby inhibits the potential of coating cracking and thus further enhances the effectiveness of the coating by reducing the potential for localized leakage. By providing elasticity, the starch thereby also reduces the necessity of the starch having to act as a moisture absorber.

The mixture must contain unmodified, i.e., ungelatinized, starch in an amount of at least 50% and preferably from 60 to 85% by weight based upon the weight of the mixture, and when coated on the meat or fish, the unmodified starch will be in an amount of at least 1.0% by weight based upon the weight of the meat or fish to be coated.

However, it also has been discovered that modified, i.e., pregelatinized starch, while not being able to fulfill the functions of the unmodified starch, may be employed advantageously in the mixture as an additive to act as a suspension stabilizer which may assist, particularly when particulate condiments, such as seasonings, are included in the mixture. However, if pregelatinized starch is used, it is not used in an amount greater than 6% and preferably less than 3% by weight based on the weight of the mixture.

A variety of unmodified starches, which are obtained from grains and tubers, may be employed. Such starches include corn, wheat, oat, potato, tapioca and rice starches. The potato is preferably dehydrated e.g. dehydrated potato granules, potato flakes, potato powder or instant mash potato. Such products are commercially available and usually contain less than 5% moisture.

Small amounts of other substially dry ingredients may be present in the coating mixture e.g. colouring agents, spices and herbs.

The amount of water in the mixture is preferably less than 5-6%.

The meat or fish may be coated with the mixture by a conventional dry or dusting application e.g. by passing the meat or fish through a bed of the dry particulate mixture e.g. on a conveyor belt. Any excess coating may, if desired, be removed by blowing air, e.g. compressed air onto the coated meat or fish.

Although the mixture and the meat or fish may be at ambient temperature, e.g., from 16°C to 25°C, for coating, the coating application process preferably is carried out at a refrigeration temperature, e.g., 4°C to 8°C, and meat or fish may be frozen when coated, which is most advantageous for coating fish. If desired, the frozen meat or fish may be steamed, conveniently in a tunnel for a few seconds e.g. 15-50 seconds, depending on the tunnel temperature before coating to make the surface more suitable for the coating to adhere.

The amount of dry particulate mixture applied to the meat or fish may conveniently be from 1 to 10% and preferably form 1.5 to 8% by weight based on the weight of the meat or fish.

It is possible, depending on the equipment used for applying the dry particulate material to the meat or fish, than an undesirable amount of dust may be released into the surroundings. If such a problem exists, it may be overcome by coating the dry particulate material with a small amount of edible oil e.g. up to 1% and preferably from 0.25 to 0.75% of oil based on the weight of the dry particulate material. The oil coated dry particulate material is preferably free flowing.

If desired, after coating with the mixture, a sauce may be applied such as Bechamel sauce, mustard sauce or white wine sauce.

After coating, although the coated food product may be packed as is, to realize the particular advantages of the present inventions, i.e., provision of an appealing convenience food which has retained a high content of its natural fluids, the coating is heated to at least a temperature sufficient to, at least partially, coagulate the heat set protein, and modify the starch. Although complete denaturation and gelation are not required, it is preferred that substantially all of the heat set protein and starch are coagulated, and gelled, respectively. As will be appreciated, temperatures in excess of 60°C, and preferably in excess 70°C, will effect these results.

Preferably, in the case of a convenience food, the coated food product is heated to cook the meat or fish at least partially, which thereby coagulates the heat set protein and modifies the starch. Grilling, searing, or stir-frying may be employed to accomplish this effectively and to provide an attractive grill mark or other pleasantly colored outer appearance. Preferably, if searing, stir-frying, or other frying is performed, minimal amounts of oil, such as an amount merely necessary to prevent sticking to a pan, are employed. It is made clear, however, that deep-fat frying cooking is not excluded and is a viable cooking method.

Alternatively, the coated meat or fish product may be heated in a steam cabinet or in an oven to cook it, and the meat or fish may be browned first by one of the methods noted above and then cooked in any way desired. In any event, no matter what cooking processing method is chosen, fluid losses are substantially reduced from the losses which occur when cooking the meat or fish without the coating.

The sous vide process also advantageously is employed, praticularly in the case of fish steaks or fillets, and it will be found that the packaged fluid purge may be reduced to substantially nil by reason of employing the present invention. Hence, the meat or fish is placed in a pouch, made of suitable food-acceptable plastic materials as known in the art, which then is sealed under vacuum, e.g., 80-87 MPa (600-650 mm Hg). The sealed pouch and contents are heated, for instance in a water bath having a water temperature sufficient, e.g., from 60°C to 75°C, for a time sufficient to make the product microbiologically stable. Preferably, the product is brought to an ICT of from 63°C to 65°C and held at such temperature for 15 mins to 18 mins. Afterwards, the pouch is chilled, and then the pouch-packaged product may be frozen. Preferably, the coating first is heat-set, such as by searing, grilling, or stir-frying, to provide a pleasant cooked outer surface appearance and to coagulate the heat set protein and gelatinize the starch, at least partially.

Additionally, it also has been discovered that in the case of retorted products which include sauces, problems arise, as indicated above, not so much from fluids entering the meat or fish, contained in the sauce, but from fluids leaving the meat or fish and diluting the sauces. By reason of fluids leaving the meat or fish and/or by transfer of fluids between meat or fish and a sauce, not only does the sauce lose its basic character and viscosity, but the meat or fish becomes undesirably dry, fibrous and tough and will lose its distinct flavor. By practice of the present invention, however, the character of the meat or fish is preserved not only by internally retaining its fluids, flavor and texture, but also, since fluid loss from the meat or fish during the retorting and during storage is inhibited, the viscosity of the sauce is maintained.

The present invention will now be further illustrated with reference to the following Examples. Parts and percentages are given by weight.

### Example 1

Raw frozen blocks of swordfish steaks 2.5 cm thick and 12 cms long are dusted with a powdered dry mixture of 25 parts of agglomerated egg white and 75 parts of dehydrated potato granules to give an uptake of the coating of 7% based on the weight of the fish, any excess being blown off by means of compressed air. A Bechamel sauce topping is applied to the coated fish and the sauce topped coated fish blocks are baked in a conventional type oven at 205°C for 75 minutes to an ICT of 74°-78°C. The baked products are then held on a steam table at 70-75°C for 2 hours after which the length of the blocks is reduced to 11 cms and the fish remains moist with a highly acceptable texture.

### Comparative Example A

The process of Example 1 is repeated except that the swordfish steaks are not dusted with the mixture of egg white and dehydrated potato granules. After being held on a steam table at 70-75°C for 2 hours, the length of the blocks is reduced to 8 cms and the fish has become extremely dry.

### Example 2

Raw frozen blocks of swordfish steaks are steamed thorugh a steam tunnel for 30 seconds and are passed on a conveyor belt through a bed of powder beads consisting of a dry mixture of 25 parts of agglomerated egg white powder and 25 parts of instant mashed potato powder. As the coated fish emerges from the mixture on a wire belt, excess dry mixture if blown off by means of compressed air. The uptake of the dry mixture of powder beads is 2.5% based on the weight of the fish. A Bechamel sauce topping is applied to the coated fish and the sauce topped coated fish blocks are baked in a conventional type oven at 205°C for 75 minutes to an ICT of 74-78°C. The baked products are then held on a steam table at 70-75°C for 2 hours after which the length of the blocks is reduced to 11 cms, the fish remains moist with an acceptable texture and the sauce consistency is excellent.

### Comparative Example B

The process of Example 2 is repeated except that the sworfish steaks are not treated with the powder bead mixture. After being held on a steam table at 70-75°C for 2 hours, the length of the blocks is reduced to 8 cms, the fish has become extremely dry and the sauce has absorbed a lot of water and is unacceptable.

## Claims

1. A method of treating meat or fish which comprises coating the meat or fish with a substantially dry particulate mixture comprising from 5 to 50% by weight of an uncoagulated heat set protein and from 95 to 50% by weight of an unmodified ungelatinised starch each weight being based upon the weight of the mixture wherein the amount of water in the mixture is less than 10%.

2. A method according to claim 1 wherin the ratio of the heat set protein to the starch is from 2:10 to 6:10.

3. A method according to claim 1 wherein the heat set protein is an egg white protein or egg albumen.

4. A method according to claim 1 wherin the starch is a potato starch.

5. A method according to claim 1 wherein the heat set protein is employed in an amount of from 15 to 35% by weight based on the weight of the dry mixture.

6. A method according to claim 1 wherein the unmodified starch is employed in an amount of from 60 to 85% by weight based on the weight of the dry mixture.

7. A method according to claim 1 wherein the amount of dry particulate mixture applied to the meat or fish is from 1 to 10% by weight based on the weight of the meat or fish.

8. A method according to claim 1 wherein after coating the meat or fish, the coated meat or fish is cooked.

9. A method according to claim 8 wherein the cooked, coated meat or fish is placed in a plastics pouch which is sealed under vacuum, heated to an ICT of from 63°C to 65°C for a period of from 15 to 18 minutes, after which the pouch is chilled or deep frozen.

10. A meat or fish product having an exterior surface coated with a substantially dry particulate mixture comprising from 5 to 50% by weight of an uncoagulated heat set protein and from 95 to 50% by weight of an unmodified ungelatinised starch each weight being based upon the weight of the mixture wherein the amount of water in the mixture is less than 10%.

## Patentansprüche

1. Verfahren zum Behandeln von Fleisch oder Fisch, das das Überziehen des Fleischs oder Fischs mit einer im wesentlichen trockenen teilchenförmigen Mischung umfaßt, die von 5 bis 50 Gew.-% eines unkoagulierten wärmegehärteten Proteins und von 95 bis 50 Gew.-% einer unmodifizierten nichtgelatinisierten Stärke umfaßt, wobei jede Gewichtsangabe auf das Gewicht der Mischung bezogen ist, wobei die Menge des Wassers in der Mischung weniger als 10 % beträgt.

2. Verfahren nach Anspruch 1, bei dem das Verhältnis des wärmegehärteten Proteins zu der Stärke von 2:10 bis 6:10 beträgt.

3. Verfahren nach Anspruch 1, bei dem das wärmegehärtete Protein ein Eiklar-Protein oder Eialbumin ist.

4. Verfahren nach Anspruch 1, bei dem die Stärke eine Kartoffelstärke ist.

5. Verfahren nach Anspruch 1, bei dem das wärmegehärtete Protein in einer Menge von 15 bis 35 Gew.-%, bezogen auf das Gewicht der trockenen Mischung, verwendet wird.

6. Verfahren nach Anspruch 1, bei dem die unmodifizierte Stärke in einer Menge von 60 bis 85 Gew.-%, bezogen auf das Gewicht der trockenen Mischung, verwendet wird.

7. Verfahren nach Anspruch 1, bei dem die Menge der trockenen teilchenförmigen Mischung, die auf das Fleisch oder den Fisch aufgebracht wird, von 1 bis 10 Gew.-%, bezogen auf das Gewicht des Fleischs oder Fischs, beträgt.

8. Verfahren nach Anspruch 1, bei dem nach dem Überziehen des Fleischs oder Fischs das überzogene Fleisch oder der überzogene Fisch gegart wird.

9. Verfahren nach Anspruch 8, bei dem das gegarte, überzogene Fleisch oder der gegarte, überzogene Fisch in einem Kunststoffbeutel angeordnet wird, der unter Vakuum verschlossen wird, auf eine ICT von 63°C bis 65°C für einen Zeitraum von 15 bis 18 Minuten erhitzt wird, wonach der Beutel gekühlt oder tiefgefroren wird.

10. Ein Fleisch- oder Fischprodukt mit einer Außenoberfläche, die mit einer im wesentlichen trockenen teilchenförmigen Mischung überzogen ist, die von 5 bis 50 Gew.-% eines unkoagulierten wärmegehärteten Proteins und von 95 bis 50 Gew.-% einer unmodifizierten nichtgelatinisierten Stärke enthält, wobei jede Gewichtsangabe auf das Gewicht der Mischung bezogen ist, wobei die Menge an Wasser in der Mischung weniger als 10 % beträgt.

## Revendications

1. Procédé pour le traitement de la viande ou du poisson, qui comprend l'enrobage de la viande ou du poisson avec un mélange en particules essentiellement sec comprenant 5 à 50 % en poids d'une protéine séchée à chaud non coagulée et 95 à 50 % en poids d'un amidon non gélatinisé non modifié, chaque poids étant basé sur le poids du mélange, la quantité d'eau dans le mélange étant inférieure à 10 %.

2. Procédé suivant la revendication 1, dans lequel le rapport de la protéine séchée à chaud à l'amidon est compris dans l'intervalle de 2:10 à 6:10.

3. Procédé suivant la revendication 1, dans lequel la protéine séchée à chaud est une protéine de blanc d'oeuf ou de l'albumine d'oeuf.

4. Procédé suivant la revendication 1, dans lequel l'amidon est une fécule de pomme de terre.

5. Procédé suivant la revendication 1, dans lequel la protéine séchée à chaud est utilisée en une quantité de 15 à 35 % en poids sur la base du poids du mélange sec.

6. Procédé suivant la revendication 1, dans lequel l'amidon non modifié est utilisé en une quantité de 60 à 85 % en poids sur la base du poids du mélange sec.

7. Procédé suivant la revendication 1, dans lequel la quantité de mélange sec en particules est appliquée à la viande ou au poisson va de 1 à 10 % en poids sur la base du poids de la viande ou du poisson.

8. Procédé suivant la revendication 1, dans lequel, après l'enrobage de la viande ou du poisson, la viande ou le poisson enrobé est cuit.

9. Procédé suivant la revendication 8, dans lequel la viande ou le poisson enrobé cuit est placé dans une poche en matière plastique qui est soudée sous vide, chauffée à une TCI de 63°C à 65°C pendant un temps de 15 à 18 minutes, la poche étant ensuite refroidie ou surgelée.

10. Produit consistant en viande ou poisson ayant une surface extérieure enrobée avec un mélange en particules essentiellement sec comprenant 5 à 50 % en poids d'une protéine séchée à chaud non coagulée et 95 à 50 % en poids d'un amidon non gélatinisé non modifié, chaque poids étant basé sur le poids du mélange, la quantité d'eau dans le mélange étant inférieure à 10 %.
